**Europäisches Patentamt**

**European Patent Office**

**Office européen des brevets**

(19)

(11) Numéro de publication : **0 279 730 B1**

# (12) FASCICULE DE BREVET EUROPEEN

(45) Date de publication du fascicule du brevet :
**12.06.91 Bulletin 91/24**

(51) Int. Cl.⁵ : **G01C 3/10**, G01C 11/00,
G01B 11/02

(21) Numéro de dépôt : **88400259.3**

(22) Date de dépôt : **04.02.88**

(54) Procédé et dispositif de relèvement tridimensionnel.

(30) Priorité : **04.02.87 FR 8701360**

(43) Date de publication de la demande :
**24.08.88 Bulletin 88/34**

(45) Mention de la délivrance du brevet :
**12.06.91 Bulletin 91/24**

(84) Etats contractants désignés :
**AT BE CH DE ES FR GB GR IT LI LU NL SE**

(56) Documents cités :
**DE-A- 2 739 679**

(73) Titulaire : **Paramythioti, Michel**
**19 Bis, 7ème Avenue Le Lys**
**F-60260 Lamorlaye (FR)**

Titulaire : **D'Aligny, Auguste**
**197, rue du Temple**
**F-75003 Paris (FR)**
Titulaire : **ELECTRICITE DE FRANCE Service National**
**2, rue Louis Murat**
**F-75008 Paris (FR)**

(72) Inventeur : **Paramythioti, Michel**
**19 bis, 7ème Avenue Le Lys**
**F-60260 Lamorlaye (FR)**
Inventeur : **D'Aligny, Auguste**
**197, rue du Temple**
**F-75003 Paris (FR)**

(74) Mandataire : **Nony, Michel et al**
**Cabinet NONY & CIE, 29, rue Cambacérès**
**F-75008 Paris (FR)**

EP 0 279 730 B1

Jouve, 18, rue Saint-Denis, 75001 PARIS

## Description

La présente invention concerne un procédé et un dispositif de relèvement tridimensionnel.

On connaît déjà un certain nombre de procédés permettant de réaliser des relevés tridimensionnels.

Le plus ancien est celui du relèvement géodésique qui peut atteindre une excellente précision mais dont la cadence de saisie est très lente. On ne peut donc, dans un temps raisonnable, saisir qu'un nombre de points limité de sorte que ce procédé ne peut être utilisé pour une scène complexe.

Par contre, en photogrammétrie (prises de vues photographiques de la même scène sous deux angles différents), le temps de saisie est court mais le traitement ultérieur par stéréorestitution est lourd et coûteux. En outre, la précision de ce procédé est souvent insuffisante.

On a proposé, pour pallier les inconvénients de ces deux méthodes un procédé de relèvement tridimensionnel dans lequel on balaye une scène en émettant un faisceau laser dans sa direction, on forme une image du spot laser ainsi obtenu sur au moins un élément d'un ensemble d'éléments photsensibles, on déduit la direction du spot laser par rapport audit ensemble de la position de l'élément récepteur excité dans ledit ensemble d'éléments, et on calcule les trois coordonnées spatiales de chaque point du balayage par triangulation à partir de l'orientation du faisceau émis et de ladite direction du spot. Un tel procédé est décrit dans le brevet français 2129747.

Ce procédé fournit toutefois des résultats insuffisants du fait que l'on ne sait orienter l'émission d'un faisceau laser qu'avec une précision très inférieure à celle avec laquelle on peut mesurer la direction du spot à la réception. La précision globale du relèvement est donc limitée directement par la précision de l'orientation du faisceau émis.

On a par conséquent proposé, par exemple dans le brevet français 2 363 779, d'utiliser comme base de triangulation au moins deux récepteurs photosensibles, formant chacun une image du spot laser éclairé par le faisceau émis. Ce procédé nécessite donc que chaque point relevé soit vu simultanément du point d'émission du faisceau laser et de deux photorécepteurs au moins. Il en résulte de nouvelles difficultés lors du relevé de scènes complexes où se produisent fréquemment des phénomènes de masquage, l'une au moins des lignes de visée étant souvent occultée.

La présente invention vise à pallier ces inconvénients, en fournissant un procédé et un dispositif permettant d'effectuer à grande vitesse des relevés tridimensionnels d'un grand nombre de points d'une scène complexe, en évitant au maximum les problèmes de masquage et en obtenant une précision limitée par celle du photorécepteur, et non par celle des moyens de balayage du faisceau laser.

A cet effet, l'invention a tout d'abord pour objet un procédé de relèvement tridimensionel dans lequel on balaye une scène en émettant un faisceau laser dans sa direction, on forme une image du spot laser ainsi obtenu sur au moins un élément d'un ensemble d'éléments photosensibles, on déduit la direction du spot laser par rapport audit ensemble de la position de l'élément récepteur excité dans ledit ensemble d'éléments, et on calcule les trois coordonnées spatiales de chaque point du balayage par triangulation à partir de l'orientation du faisceau émis et de ladite direction du spot, caractérisé par le fait que l'on balaye ladite scène en commandant l'orientation dudit faisceau relativement grossièrement, que l'on mesure plus précisément l'orientation du faisceau émis indépendamment de la commande d'orientation, et que l'on calcule lesdites coordonnées spatiales à partir de l'orientation mesurée du faisceau émis et de ladite direction du spot.

On notera tout d'abord que les termes "grossièrement" et "précisément" sont à considérer l'un par rapport à l'autre.

Par "précisément", on entend que l'on mesure l'orientation du faisceau émis avec une précision du même ordre de grandeur que celle avec laquelle on peut mesurer la direction de visée du spot laser au niveau de l'ensemble d'éléments photosensibles, de manière à fonder la détermination des coordonnées spatiales des points de la scène sur des données homogènes. Par contre, on entend par "grossièrement" le fait que le faisceau émis peut éventuellement être orienté avec une précision très inférieure à celle que l'on obtient avec un ensemble d'éléments photosensibles, puisque cette orientation n'est plus déterminante dans le procédé selon l'invention. Un bon contrôle à l'émission est néanmoins souhaitable dans la mesure où elle conditionne la régularité de la trame du balayage. On donnera ci-après des ordres de grandeur possibles pour ces différentes précisions.

Dans l'invention, on utilise par conséquent comme base de triangulation, d'une part le point d'émission du faisceau laser (en fait la sortie des moyens de balayage), et d'autre part le centre optique de l'organe récepteur comportant l'ensemble d'éléments photosensibles. Chaque point de la scène vu de ces deux points seulement peut par conséquent faire l'objet d'un relèvement tridimensionnel, ce qui permet d'analyser des scènes complexes avec un minimum de problèmes de masquage.

Enfin, du fait que l'on sait défléchir très rapidement un faisceau laser, on peut effectuer en un temps limité le relevé d'un très grand nombre de points de la scène.

D'autre part, l'élément récepteur excité précité, peut en fait être constitué d'une pluralité d'éléments récepteurs. Dans ce cas, on effectue de façon connue une interpolation entre ces différents éléments, par exemple par un calcul informatique en temps-réel. La direction du spot laser par rapport à l'ensemble d'éléments photosensibles est ainsi connue avec une beaucoup plus grande précision.

La connaissance complète de l'orientation du faisceau émis et de la direction de visée du spot laser, c'est-à-dire de quatre angles, serait redondante pour déterminer les trois coordonnées spatiales du point visé. Seuls, trois de ses angles sont nécessaires.

De préférence, on utilise pour déterminer ces trois coordonnées spatiales deux angles d'émission et un angle de réception.

On peut en effet mesurer ces angles d'émission avec une précision au moins équivalente à celle obtenue à la réception, comme cela sera exposé ci-dessous.

On mesure avantageusement les deux angles d'émission indépendamment l'un de l'autre.

La présente invention a également pour objet un dispositif de relèvement tridimensionnel d'une scène, comprenant un émetteur laser, des moyens de balayage pour balayer la scène à l'aide du faisceau émis par le laser, et un premier récepteur photosensible pour former une image du spot créé par le faisceau laser sur la scène, caractérisé par le fait qu'il comprend des moyens de mesure indépendants des moyens de balayage pour mesurer l'orientation du faisceau à la sortie des moyens de balayage.

Ces moyens de balayage peuvent comprendre un miroir mobile autour d'un axe et réfléchissant le faisceau émis par ledit laser, lesdits moyens de mesure comprenant une source lumineuse secondaire éclairant ledit miroir et un deuxième récepteur photosensible pour recevoir le faisceau émis par première source secondaire et réfléchi par le miroir.

L'axe de rotation dudit miroir passe de préférence par le plan du miroir et rencontre l'axe optique du laser et l'axe optique du deuxième récepteur photosensible.

Ledit deuxième récepteur photosensible est de préférence constitué par une caméra linéaire comportant une barrette d'éléments photosensibles disposés dans le plan qui passe par ladite source secondaire et qui est perpendiculaire à l'axe de rotation du miroir.

Ce récepteur permet de mesurer avec précision la position angulaire du miroir de balayage, donc un angle (angle d'azimut) caractéristique de l'orientation du faisceau laser émis.

Lesdits moyens de balayage peuvent également comprendre une plate-forme montée pivotante sur un bâti fixe, lesdits moyens de mesure comprenant alors un capteur angulaire pour mesurer l'angle de pivotement de la plate-forme par rapport au bâti.

On peut utiliser à cet effet un codeur optique de précision du commerce.

Ce capteur mesure donc le second angle (angle de site) déterminant l'orientation du faisceau laser émis.

On notera que, l'angle de site ne participant pas à la triangulation, la précision obtenue à l'aide d'un codeur optique est suffisante pour mesurer cet angle.

Selon un autre aspect de l'invention, lesdits moyens de balayage comprennent une plate-forme montée pivotante sur un bâti fixe et un miroir mobile monté sur ladite plate-forme et réfléchissant le faisceau émis par le laser, et ledit premier récepteur photosensible est monté solidaire de la plate-forme et comprend un barrette d'éléments photosensibles disposés dans le plan balayé par le faisceau réfléchi lors de la rotation du miroir et recevant l'image du spot laser produit par le faisceau sur la scène.

Ledit premier récepteur photosensible est de préférence une caméra linéaire dont le centre optique est situé sur l'axe de pivotement de la plate-forme.

De même, l'axe de rotation du miroir est de préférence positionné de manière à rencontrer sensiblement perpendiculairement l'axe de pivotement de la plate-forme.

Dans un mode de réalisation particulier de l'invention, ledit axe de pivotement de la plate-forme est confondu avec l'axe optique de l'émetteur laser.

En d'autres termes, le dispositif selon l'invention peut être analysé comme comprenant une plate-forme équipée pour fournir une saisie optique bidimensionnelle par balayage horizontal et triangulation dans le plan de visée de la caméra constituant le premier récepteur photosensible, le balayage vertical étant obtenu par pivotement de la plate-forme par rapport à un bâti autour d'un axe passant par la base de triangulation, chaque position de la plate-forme fournissant une ligne du balayage.

On décrira maintenant à titre d'exemple non limitatif un mode de réalisation particulier de l'invention en référence aux dessins annexés dans lesquels :

- la figure 1 est une vue schématique en élévation latérale d'un dispositif selon l'invention et,
- la figure 2 est une vue schématique selon la flèche II de la figure 1.

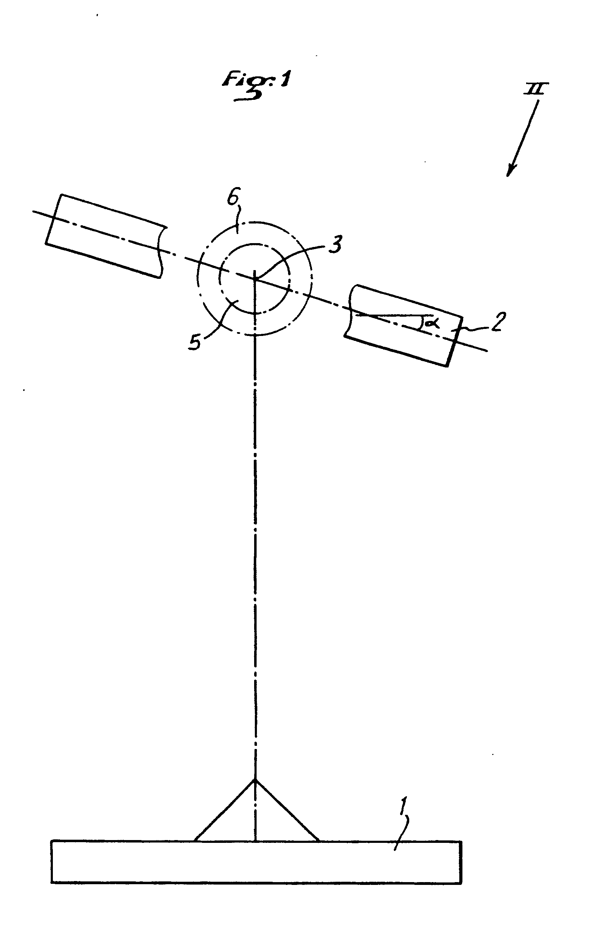

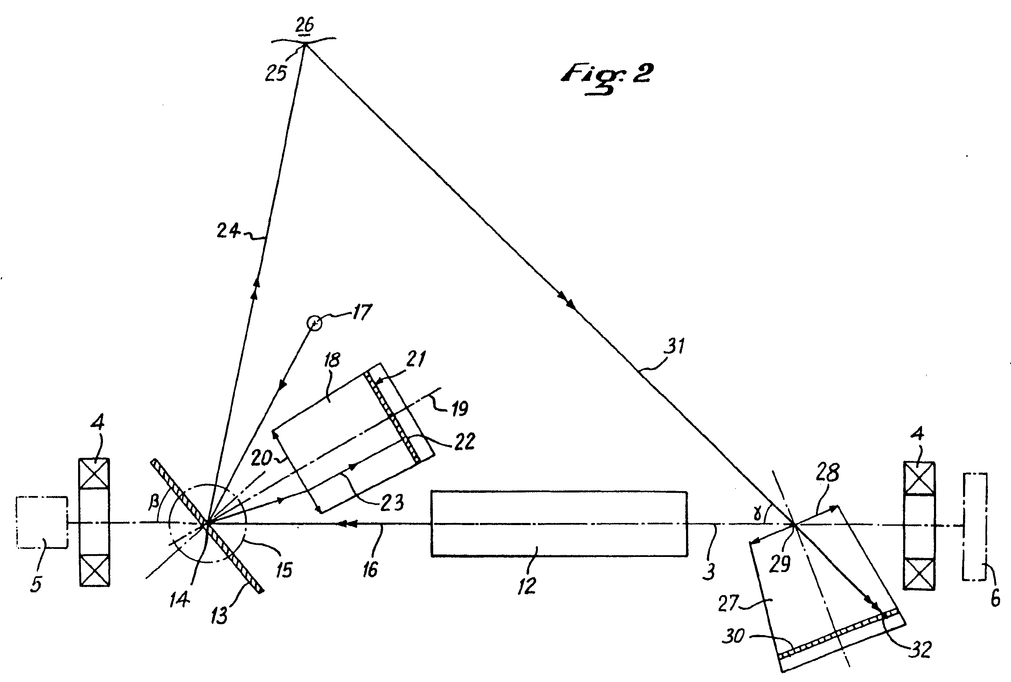

La figure 1 montre le bâti fixe 1 de ce dispositif sur lequel une plate-forme 2 est montée pivotante autour d'un axe 3. Cette plate-forme est supportée par deux paliers 4 (figure 2) et entraînée en rotation par un moteur pas-à-pas 5, ou tout autre moyen équivalent.

Un codeur optique 6 monté sur l'axe 3 donne la mesure de l'angle α que fait la plate-forme 2 par rapport au bâti 1.

Si l'on se réfère maintenant à la figure 2, un laser 12 est monté sur la plate-forme 2 avec son axe optique confondu avec l'axe de pivotement 3. Un miroir mobile 13 est monté sur la plate-forme 2 autour d'un axe de rotation 14 et peut être entraîné en rotation par un galvanomètre 15. L'axe de rotation 14 se trouve dans le plan réfléchissant du miroir 13 perpendiculaire à l'axe 3. Par conséquent, le faisceau 16 issu du laser 12 frappe le miroir 13 sur son axe de pivotement 14 et apparaît donc issu d'un point fixe.

Une source lumineuse secondaire 17 et une caméra linéaire 18 sont également montées sur la plate-forme 2 de telle sorte que la diode 17 éclaire le miroir 13. L'axe optique 19 de l'objectif 20 de la caméra 18 rencontre perpendiculairement l'axe de rotation 14 du miroir, sa barrette 21 d'éléments photosensibles se trouvant dans un plan perpendiculaire à l'axe 14.

Dans le cas présent, l'objectif 20 est disposé après la réflexion sur le miroir 13, mais il pourrait également être disposé avant.

Ainsi, la connaissance de l'élément photosensible 22 éclairé par le faisceau 23 issue de la source 17 réfléchi par le miroir 13 donne une mesure de l'angle β d'orientation du miroir 13 par rapport à l'axe 3.

Le faisceau laser principal 16 réfléchi en 24 forme au point 25 de la scène 26 un spot lumineux.

Une caméra linéaire 27 est montée sur la plate-forme 2 de telle sorte que son objectif 28 ait son centre optique 29 sur l'axe 3, sa barrette 30 d'éléments photosensibles se trouvant dans le plan contenant l'axe 3 et perpendiculaire à l'axe 14, c'est-à-dire dans le plan des faisceaux 16 et 24.

Ainsi, le faisceau 31 diffusé par le spot lumineux 25 donne de ce spot une image sur un élément photosensible 32 de la barrette 30. La connaissance de cet élément 32 donne une mesure de l'angle γ entre l'axe 3 et la droite joignant le point visé 25 au centre optique 29 de la caméra 27.

La longueur de la base de triangulation, c'est-à-dire la distance entre le centre optique 29 de la caméra 27 et l'axe de rotation 14 du miroir 13, ainsi que les valeurs des angles β et γ, permettent de résoudre le triangle (14, 25, 29), et par conséquent de déterminer la position du point 25 dans le plan contenant l'axe 3 et perpendiculaire à l'axe 14 (plan de la figure 2). Comme ce plan est connu par la valeur de l'angle α dont la plate-forme 2 est inclinée par rapport au bâti, on peut en déduire les trois coordonnées spatiales du point 25 dans un repère lié à ce bâti.

A titre d'exemple, on peut utiliser, pour les barrettes 21 et 30 d'éléments photosensibles, des barrettes à 4096 photodiodes. Ces barrettes se prêtent bien à un calcul d'interpolation permettant de positionner l'image de la source lumineuse visée à une fraction de diode près. L'écart type sur la position de l'image qui en résulte est de l'ordre de 1 μ, ce qui donne pour les mesures des angles β et γ une précision de l'ordre de quelques secondes d'arc, fonction de la focale utilisée.

Le galvanomètre permet un balayage rapide, par exemple de 200 à 500 positions du miroir 13 par seconde, séparées entre elles de quelques minutes d'arcentre deux positions successives.

Le moteur pas-à-pas 5 assure un pivotement de la plate-forme 2 par pas successifs également de l'ordre de quelques minutes d'arc, mais l'intervalle de temps entre deux positions correspond maintenant au délai de balayage d'une ligne, soit par exemple de 2 à 4 secondes (balayage lent).

Les précisions angulaires de positionnement de la plate-forme 2 et du miroir 13 obtenues à l'aide du moteur 5 et du galvanomètre 15 peuvent être de l'ordre de la minute d'arc, ce qui doit être comparé à la précision précitée obtenue sur la mesure des angles. La mesure de l'angle β est même meilleure que celle obtenue sur γ, du fait que l'image de la source secondaire, contrôlée en luminosité et en distance, est mieux définie que l'image du spot laser fournie par la caméra 27. On obtient ainsi une précision sur les coordonnées spatiales de chaque point visé s'approchant de celle qui peut être obtenue par relèvement géodésique.

Par contre, la vitesse de saisie est incomparablement supérieure, puisque l'on peut à titre d'exemple obtenir un fichier des trois coordonnées de 250000 points d'une scène en un temps de l'ordre de 10 à 15 minutes.

Diverses variantes et modifications peuvent bien entendu être apportées à la description qui précède sans sortir pour autant du cadre ni de l'esprit de l'invention.

C'est ainsi en particulier que la mesure de l'angle β pourrait s'effectuer par réflexion sur l'autre face du miroir 13.

On peut également prévoir une caméra redonante, disposée comme la caméra 27, mais à une certaine distance de cette dernière sur l'axe 3, de manière à éliminer la plupart des problèmes de masquage lors de l'analyse d'une scène très complexe.

On pourra également placer un dispositif optique de réglage intermédiaire entre la source laser et le miroir afin d'assurer l'orientation parfaite du faisceau incident sur celui-ci.

## Revendications

1. Procédé de relèvement tridimensionnel dans lequel on balaye une scène en émettant un faisceau laser (24) dans sa direction, on forme une image du spot laser ainsi obtenu sur au moins un élément d'un ensemble d'éléments photosensibles, on déduit la direction du spot laser par rapport audit ensemble de la position de l'élément récepteur excité dans ledit ensemble d'éléments, et on calcule les trois coordonnées spatiales de chaque point du balayage par triangulation à partir de l'orientation du faisceau émis et de ladite direction du spot, caractérisé par le fait que l'on balaye ladite scène en commandant l'orientation dudit faisceau relativement grossièrement, que l'on mesure plus précisément l'orientation du faisceau émis, indépendamment de la commande d'orientation, et que l'on calcule lesdites coordonnées spatiales à partir de l'orientation mesurée du faisceau émis et de ladite direction du spot.

2. Procédé selon la revendication 1, caractérisé par le fait que l'on déduit lesdites coordonnées spatiales de deux angles d'émission ($\alpha$, $\beta$) et d'un angle de réception ($\gamma$).

3. Procédé selon la revendication 2, caractérisé par le fait que l'on mesure les deux angles d'émission indépendamment l'un de l'autre.

4. Dispositif de relèvement tridimensionnel d'une scène, comprenant un émetteur laser (12), des moyens de balayage (2, 5, 13, 15) pour balayer la scène à l'aide du faisceau émis par le laser, et un premier récepteur photosensible (27) pour former une image du spot créé par le faisceau laser sur la scène, caractérisé par le fait qu'il comprend des moyens de mesure indépendants des moyens de balayage pour mesurer l'orientation du faisceau à la sortie des moyens de balayage.

5. Dispositif selon la revendication 4, caractérisé par le fait que lesdits moyens de balayage comprennent un miroir mobile autour d'un axe et réfléchissant le faisceau émis par ledit laser, et que lesdits moyens de mesure comprennent une source lumineuse secondaire (17) éclairant ledit miroir et un deuxième récepteur photosensible (18) pour recevoir le faisceau émis par ladite source secondaire et réfléchi par le miroir.

6. Dispositif selon la revendication 5, caractérisé par le fait que l'axe de rotation du miroir passe par le plan du miroir et rencontre l'axe optique (3) du laser et l'axe optique (19) du deuxième récepteur photosensible.

7. Dispositif selon l'une quelconque des revendications 5 et 6, caractérisé par le fait que ledit deuxième récepteur photosensible comprend une caméra linéaire comportant une barrette (21) d'éléments photosensibles disposés dans le plan qui passe par ladite source lumineuse secondaire et qui est perpendiculaire à l'axe de rotation du miroir.

8. Dispositif selon l'une quelconque des revendications 4 à 7, caractérisé par le fait que lesdits moyens de balayage comprennent une plate-forme (2) montée pivotante sur un bâti fixe (1), et que lesdits moyens de mesure comprennent un capteur angulaire (6) pour mesurer l'angle de pivotement ( ) de la plate-forme par rapport au bâti.

9. Dispositif selon la revendication 4, caractérisé par le fait que les dits moyens de balayage comprennent une plate-forme montée pivotante sur un bâti fixe, et un miroir mobile monté sur ladite plate-forme et réfléchissant le faisceau émis par le laser, et que ledit premier récepteur photosensible est disposé dans le plan balayé par le faisceau réfléchi par le miroir lors de la rotation du miroir pour recevoir l'image du spot laser produit par le faisceau sur la scène.

10. Dispositif selon la revendication 9, caractérisé par le fait que ledit premier récepteur photosensible est une caméra linéaire dont le centre optique (29) est situé sur l'axe de pivotement de la plate-forme.

11. Dispositif selon l'une quelconque des revendications 9 et 10, caractérisé par le fait que l'axe de rotation du miroir rencontre sensiblement perpendiculairement l'axe de pivotement de la plate-forme.

12. Dispositif selon l'une quelconque des revendications 9 à 11, caractérisé par le fait que ledit axe de rotation de la plate-forme est confondu avec l'axe optique de l'émetteur laser.

## Ansprüche

1. Verfahren zur dreidimensionalen Vermessung, bei dem eine Szene abgetastet wird, indem ein Laserstrahl (24) in ihre Richtung ausgesendet wird, ein Bild des so erhaltenen Laserpunkts auf mindestens einem Element eines Satzes fotoempfindlicher Elemente gebildet wird, die Richtung des Laserpunkts bezüglich des Satzes von Elementen aus der Position des angeregten Empfangselements des Satzes der Elemente bestimmt wird, und die drei Raumkoordinaten jedes Punkts der Abtastung durch Triangulation anhand der Orientierung des ausgesandten Strahls und der Richtung des Laserpunkts berechnet werden, dadurch gekennzeichnet, daß die Szene abgetastet wird, indem die Orientierung des genannten Strahls relativ grob gesteuert wird, daß die Orientierung des ausgesandten Strahls unabhängig von der Orientierungssteuerung viel genauer gemessen wird, und daß die genannten Raumkoordinaten anhand der gemessenen Orientierung des ausgesandten Strahls und der genannten Richtung des Punkts berechnet werden.

2. Verfahren nach Anspruch 1, dadurch gekennzeichnet, daß die genannten Raumkoordinaten aus zwei Emissionswinkeln ($\alpha$, $\beta$) und einem Empfangswinkel ($\gamma$) abgeleitet werden.

3. Verfahren nach Anspruch 2, dadurch gekennzeichnet, daß die zwei Emissionswinkel unabhängig voneinander gemessen werden.

4. Vorrichtung zur dreidimensionalen Vermessung einer Szene mit einem Lasersender (12), Abtasteinrichtungen (2, 5, 13, 15) zur Abtastung der Szene mittels des von dem Laser ausgesandten Strahls, und einem ersten fotoempfindlichen Empfänger (27) zur Bildung eines Bildes des von dem Laserstrahl auf der Szene erzeugten Punkts, gekennzeichnet durch von den Abtasteinrichtungen unabhängige Meßeinrichtungen zur Messung der Orientierung des Strahls am Ausgang der Abtasteinrichtungen.

5. Vorrichtung nach Anspruch 4, dadurch gekennzeichnet, daß die Abtasteinrichtungen einen um eine Achse beweglichen Spiegel umfassen, der den Laserstrahl reflektiert, und daß die Meßeinrichtungen eine zweite Lichtquelle (17), die den Spiegel beleuchtet, und einen zweiten fotoempfindlichen Empfänger (18) zum Empfang des von der genannten zweiten Quelle ausgesandten und von dem Spiegel reflektierten Strahls umfassen.

6. Vorrichtung nach Anspruch 5, dadurch gekennzeichnet, daß die Drehachse des Spiegels die Spiegelfläche durchläuft und die optische Achse (3) des Lasers sowie die optische Achse(19) des zweiten fotoempfindlichen Empfängers schneidet.

7. Vorrichtung nach Anspruch 5 oder 6, dadurch gekennzeichnet, daß der zweite fotoempfindliche Empfänger eine lineare Kamera umfaßt, die eine Reihe (21) fotoempfindlicher Elemente aufweist, die in der durch die genannte zweite Lichtquelle verlaufende und senkrecht auf der Drehachse des Spiegels stehenden Ebene angeordnet sind.

8. Vorrichtung nach einem der Ansprüche 4 bis 7, dadurch gekennzeichnet, daß die genannten Abtasteinrichtungen eine schwenkbar auf einem feststehenden, tragenden Element (1) angebrachte Plattform (2) umfassen und daß die genannten Meßeinrichtungen einen Winkelaufnehmer (6) zur Messung des Schwenkwinkels (α) der Plattform bezüglich des tragenden Elements umfassen.

9. Vorrichtung nach Anspruch 4, dadurch gekennzeichnet, daß die genannten Abtasteinrichtungen eine schwenkbar auf einem feststehenden, tragenden Element angebrachte Plattform und einen auf dieser Plattform angebrachten beweglichen Spiegel, der den Laserstrahl reflektiert, umfassen und daß der genannte erste fotoempfindliche Empfänger in der Ebene angeordnet ist, die von dem von dem Spiegel reflektierten Strahl aufgrund der Drehung des Spiegels bestrichen wird, um das Bild des von dem Strahl auf der Szene erzeugten Laserpunkts zu empfangen.

10. Vorrichtung nach Anspruch 9, dadurch gekennzeichnet, daß der erste fotoempfindliche Empfänger eine lineare Kamera darstellt, deren optischer Mittelpunkt (29) auf der Schwenkachse der Plattform liegt.

11. Vorrichtung nach Anspruch 9 oder 10, dadurch gekennzeichnet, daß die Drehachse des Spiegels die Schwenkachse der Plattform genau senkrecht schneidet.

12. Vorrichtung nach einem der Ansprüche 9 bis 11, dadurch gekennzeichnet, daß die Drehachse der Plattform mit der optischen Achse des emitierenden Lasers zusammenfällt.

## Claims

1. A method of three-dimensional resection in which a scene is scanned by emitting a laser beam (24) in its direction, an image of the laser spot thus obtained is formed on at least one element of a group of photosensitive elements, the direction of the laser spot with respect to the said group is deduced from the position of the excited receiver element in the said group of elements and the three spatial coordinates of each point of the scan is calculated by triangulation from the orientation of the emitted beam and the said direction of the spot, characterized by the fact that the said scene is scanned by controlling the orientation of the said beam relatively coarsely, that the orientation of the emitted beam is measured more accurately, independently of the orientation control, and that the said spatial coordinates are calculated from the measured orientation of the emitted beam and the said direction of the spot.

2. A method as in Claim 1, characterized by the fact that the said spatial coordinates are deduced from two angles of emission ($\alpha$, $\beta$) and one angle of reception ($\gamma$).

3. A method as in Claim 2, characterized by the fact that the two angles of emission are measured independently of one another.

4. A device for three-dimensional resection of a scene, comprising a laser emitter (12), scanning means (2, 5, 13, 15) for scanning the scene with the aid of the beam emitted by the laser, and a first photosensitive receiver (27) for forming an image of the spot created upon the scene by the laser beam, characterized by the fact that it comprises means of measurement independent of the scanning means, for measuring the orientation of the beam at the outlet from the scanning means.

5. A device as in Claim 4, characterized by the fact that the said scanning means comprise a mirror movable about an axis and reflecting the beam emitted by the said laser, and that the said means of measurement comprise a secondary source of light (17) shining on the said mirror and a second photosensitive receiver (18) for rceiving the beam emitted by the said secondary source and reflected by the mirror.

6. A device as in Claim 5, characterized by the fact that the axis of rotation of the mirror passes through the plane of the mirror and meets the optical axis (3) of the laser and the optical axis (19) of the second photosensitive receiver.

7. A device as in either of the Claims 5 or 6, characterized by the fact that the said second photosensitive receiver comprises a linear camera including a strip (21) of photosensitive elements arranged in the plane which passes through the said secondary source of light and is perpendicular to the axis of rotation of the mirror.

8. A device as in any one of the Claims 4 to 7, characterized by the fact that the said scanning means comprise a platform (2) mounted pivotally on a fixed frame (1), and that the said means of measurement comprise an angular pick-up (6) for measuring the angle of pivot ( ) of the platform with respect to the frame.

9. A device as in Claim 4, characterized by the fact that the said scanning means comprise a platform mounted pivotally on a fixed frame and a movable mirror mounted on the said platform and reflecting the beam emitted by the laser, and that the said first photosensitive receiver is arranged in the plane swept by the beam reflected by the mirror upon rotation of the mirror for receiving the image of the laser spot produced by the beam on the scene.

10. A device as in Claim 9, characterized by the fact that the said first photosensitive receiver is a linear camera of which the optical centre (29) is situated on the axis of pivot of the platform.

11. A device as in either of the Claims 9 or 10, characterized by the fact that the axis of rotation of the mirror meets the axis of pivot of the platform substantially perpendicularly.

12. A device as in any one of the Claims 9 to 11, characterized by the fact that the said axis of rotation of the platfom coincides with the optical axis of the laser emitter.

Fig. 1

Fig. 2